# EUROPÄISCHE PATENTANMELDUNG

(11) **EP 4 459 392 A1**
(43) Veröffentlichungstag der Anmeldung: **06.11.2024**
(21) Anmeldenummer: 23171881.8
(22) Anmeldetag: 05.05.2023
(51) Int. Cl.: G05B 17/02

(54) **VERFAHREN UND SYSTEME ZUM AUSLEGEN VON ANTRIEBSSYSTEMEN**

(71) Anmelder: Siemens Aktiengesellschaft, 80333 München (DE)
(72) Erfinder: Amthor, Karl-Josef, 82229 Seefeld (DE); Bretschneider, Jochen, 88696 Owingen (DE); Günther, Erich, 91056 Erlangen (DE); Hamm, Carsten, 91330 Eggolsheim (DE); Neugebauer, Christian, 90419 Nürnberg (DE)
(74) Vertreter: Siemens Patent Attorneys

(57) **Zusammenfassung**

Die Erfindung betrifft ein computergestütztes Verfahren zum Auslegen zumindest eines Antriebssystems (100), welches eine Steuerstrecke (101) unmittelbar beeinflusst (102), wobei das Antriebssystem (100) und die Steuerstrecke (101) gemeinsam ein Gesamtsystem (103) bilden, wobei
(S1)
ein konfigurierbarer digitaler Zwilling des Antriebssystems (100) - ein Antriebszwilling (105) - und ein vorgegebenes konfigurierbares Modell der Steuerstrecke (101) - ein Streckenmodell (106) - bereitgestellt werden,
(S2)
der Antriebszwilling (105) mit dem Streckenmodell (106) zu einem ablauffähigen digitalen Zwilling des Gesamtsystems (103) - einem Gesamtzwilling (108) - verknüpft wird, wobei beim Verknüpfen der Antriebszwilling (105) parametriert wird, wodurch ein Startparametersatz (110) des Antriebszwillings (105) festgelegt wird,
(S3)
der Gesamtzwilling (108) ausgeführt wird, um das Verhalten des Gesamtsystems (103) zu simulieren und dadurch Simulationsergebnisse (113) zu erhalten,
(S4)
das Antriebssystem (100) des Gesamtsystems (103) gemäß dem Startparametersatz (110) ausgelegt wird,
(S5)
die Simulationsergebnisse (113) mit dem Verhalten des Gesamtsystem (103) verglichen werden,
(S6)
bei Abweichen des Verhaltens des Gesamtsystem (103) von den Simulationsergebnissen (113), zumindest der Antriebszwilling (105) hinsichtlich eines vorgegebenen Optimierungsziels optimiert wird, wodurch ein optimierter Parametersatz (117) des Antriebszwillings (105) erhalten wird,
(S7)
das Antriebssystem (100) des Gesamtsystems (103) gemäß dem optimierten Parametersatz (117) ausgelegt wird.

## Beschreibung

*Unabhängig vom grammatikalischen Geschlecht eines bestimmten Begriffes sind Personen mit männlicher, weiblicher oder anderer Geschlechteridentität mit umfasst.*

Die vorliegende Offenbarung betrifft ein computergestütztes Verfahren ein System zum Auslegen zumindest eines Antriebssystems, welches eine Steuerstrecke unmittelbar beeinflusst - und somit einen Prozess steuert, insbesondere regelt, wobei das Antriebssystem und die Steuerstrecke gemeinsam ein Gesamtsystem bilden.

Darüber hinaus betrifft die vorliegende Offenbarung eine Recheneinrichtung umfassend eine Engineering-Plattform, welche dazu konfiguriert ist, das vorgenannte Verfahren auszuführen oder dieses zu orchestrieren.

Außerdem betrifft die vorliegende Offenbarung ein Computerprogramm, welches Befehle umfasst, die, wenn sie von der vorgenannten Recheneinrichtung abgearbeitet werden, diese dazu veranlassen, das vorgenannte Verfahren auszuführen.

Obendrein betrifft die vorliegende Offenbarung ein maschinenlesbares Medium mit einem solchen Computerprogramm.

Frage zur Auslegung eines Antriebssystems oder seines Teilsystems (Objekt, wie Umrichter, Motor, etc.) kann sehr komplex sein. Ziel ist meist die Optimierung nach gewählten Kriterien (Kosten, Performance, insbesondere die Einstelldauer einer Regelgröße, Energieverbrauch, Platzbedarf etc.). Dies umfasst sowohl die Wahl der richtigen Komponenten als auch die Wahl der richtigen Kombination.

Bevor eine Automatisierung einer Anlage erfolgt beziehungsweise eine Automatisierungsanlage gebaut werden kann, muss sie projektiert werden. Dabei werden für eine durch die Automatisierungsanlage, d.h. eine Anlage, die Automatisierungskomponenten beinhaltet, zu lösende Aufgabe passende Anlagenkomponenten ausgewählt. Das schließt die Auslegung der Antriebssysteme für die Anlagenkomponenten mit ein.

Die Auslegung hängt dabei von einem konkreten Anwendungsszenario wie zum Beispiel eine Unterstützung einer Inbetriebnahme, eine Unterstützung einer Diagnose, eine Unterstützung von Trainingsmaßnahmen etc. ab.

Typischerweise erfolgt diese Optimierung auf Basis statischer Daten, d.h. Katalog-, Typenschilddaten, etc., die insbesondere nicht aktualisiert werden und vom Betriebsverhalten des Antriebssystems und/oder von der Dynamik in dem Anwendungsszenario nicht abhängen. Besonders nachteilhaft dabei ist, dass eine Optimierung basierend auf (dynamischen) Eigenschaften des Systems nicht möglich ist. Bekannt ist z.B. eine Auslegung mit nur einem Optimierungskriterium (Baugröße oder Preis). Dabei ist die Auslegung nicht oder nur unvollständig automatisierbar, da die Validierung der Projektierung erst mit dem realen Gerät erfolgt bzw. der Vorstellungskraft und der Erfahrung des Anwenders überlassen wird.

Zur Auslegung können auch Berechnungsergebnisse verwendet werden, die mithilfe in Simulationstools einbindbarer digitaler Zwillinge der Antriebssysteme erzielt werden.

Ein digitaler Zwilling eines Antriebssystems ist grundsätzlich eine virtuelle Repräsentation des realen Antriebssystems und kann vorzugsweise echtzeitfähig gestaltet werden, wenn er beispielsweise durch aus Sensoren und anderen Datenquellen gewonnenen Daten in Echtzeit aktualisiert wird. Dieser digitale Zwilling kann auf einer Vielzahl von Datenquellen basieren, wie z.B. Betriebsdaten, Konstruktionszeichnungen und Modellen, Wartungshistorien und anderen Informationen, die im Laufe der Lebensdauer des Antriebssystems gesammelt wurden.

Der digitale Zwilling kann eine Vielzahl von Funktionen ermöglichen, wie z.B. Überwachung, Simulation und Vorhersage von Leistung und Zustand des Antriebssystems. Es kann auch als digitales Modell für die Optimierung von Wartungsprozessen und die Verbesserung der Leistung dienen. Darüber hinaus kann es auch dazu beitragen, Ausfallzeiten und Wartungskosten zu reduzieren, indem es potenzielle Probleme frühzeitig erkennt und entsprechende Maßnahmen empfiehlt. Er kann genutzt werden, um auch die Effizienz des Antriebssystems zu verbessern, indem es optimale Betriebsbedingungen ermittelt und vorschlägt und die Leistung im Laufe der Zeit überwacht.

Außerdem kann ein digitaler Zwilling des Antriebssystems eine leistungsstarke Möglichkeit bieten, die Leistung und Effizienz des Antriebssystems zu optimieren und gleichzeitig die Wartungskosten zu senken.

Unter dem digitalen Zwilling (zu engl.: digital twin) eines Antriebssystems wird im Rahmen der vorliegenden Offenbarung ein Simulationsmodell des Antriebssystems verstanden, das beispielsweise in Form eines FMU-Modells (FMU = Functional Mock-up Unit) vorliegen kann - z.B. als eine .fmu-Datei, mit dem zumindest ein ausgewählter Teilaspekt des Verhaltens des Antriebssystems simuliert werden kann.

Solche FMUs können über sogenannte Functional Mock-up Interface oder kurz FMIs miteinander verknüpft werden (siehe https://fmi-standard.org/). FMI ist eine Standard-Schnittstelle für den Austausch von modellbasierten Simulationen zwischen verschiedenen Simulationswerkzeugen und -umgebungen. FMUs genügen dem FMI Standard können aber grundsätzlich über andere Schnittstellen verbunden oder in andere Umgebungen eingebunden werden.

FMI definiert ein standardisiertes Datenformat für modellbasierte Simulationen, das auf XML- und Binärdateien basiert. Es ermöglicht den Austausch von Modellkomponenten und deren Verbindungen zwischen verschiedenen Simulationsumgebungen und -Tools. Es ermöglicht Erstellen von komplexen Systemen aus verschiedenen Komponenten und Modellen, die in verschiedenen Simulationsumgebungen und -Tools eingebettet werden können.

Insbesondere unterstützt FMI dynamische (zeitbasierte) Modelle, die auf unterschiedlichen mathematischen Beschreibungen basieren, wie z.B. Differentialgleichungen, Zustandsautomaten, Ereignisgesteuerte Systeme und mehr. Im FMI können auch Schnittstellen definiert werden, die den Datenaustausch zwischen den Modellkomponenten und deren Steuerung durch die Simulationsumgebung ermöglichen.

Die Auslegung mithilfe digitaler Zwillinge erfolgt heute weitestgehend singulär. D.h. beispielsweise, dass die Verknüpfung von verschiedenen Tools und den Digital Twins oder den Digital Twins untereinander, wenn mehrere Antriebssysteme ausgelegt werden sollen, manuell erfolgt. Z.B. kann für die Auslegung eine Momentaufnahme eines Lastverhaltens für einen Antriebsverbund (Regelungseinheit mit der elektrischen rotatorischen Maschine) die Haupteingangsgröße sein. Der Nutzer muss dabei verschiedene dieser Momentaufnahmen manuell jeweils separat im Auslegungstool bewerten und die optimale Auslegung selbst ermitteln.

Auch bei komplexeren Anlagen, die mehrere Antriebsverbünde beinhalten können, muss der Nutzer die einzelnen Verbünde manuell bewerten (beispielsweise für die Auslegung einer Einspeisung bei einem Mehrachser oder Parallelschaltung von Einspeisungen und die Wechselwirkungen der netzseitigen Filtermodule) .

Der vorliegenden Offenbarung liegt somit die Aufgabe zugrunde, Verfahren und Systeme zur Auslegung von Antriebssystemen bereitzustellen, die im Vergleich zu den bereits bestehenden Auslegungsverfahren und -systemen schneller und einfacher in Handhabung sind und dabei genauere Auslegungsergebnisse liefern.

Diese Aufgabe wird mit einem eingangs genannten computergestützten Verfahren gelöst, wobei

| | |
|---|---|
| S1: | ein konfigurierbarer digitaler Zwilling des Antriebssystems - ein Antriebszwilling - und ein vorgegebenes konfigurierbares Modell der Steuerstrecke - ein Streckenmodell - bereitgestellt werden, |
| S2: | der Antriebszwilling mit dem Streckenmodell zu einem ablauffähigen digitalen Zwilling des Gesamtsystems - einem Gesamtzwilling - verknüpft wird, wobei beim Verknüpfen der Antriebszwilling parametriert wird, wodurch ein Startparametersatz des Antriebszwillings festgelegt wird, |
| S3: | der Gesamtzwilling ausgeführt wird, um das Verhalten des Gesamtsystems zu simulieren und dadurch Simulationsergebnisse zu erhalten, |
| S4: | das Antriebssystem des Gesamtsystems gemäß dem Startparametersatz ausgelegt wird, |
| S5: | die Simulationsergebnisse mit dem Verhalten des Gesamtsystem verglichen werden, |
| S6: | bei Abweichen des Verhaltens des Gesamtsystem von den Simulationsergebnissen, zumindest der Antriebszwilling hinsichtlich eines vorgegebenen Optimierungsziels optimiert wird, wodurch ein optimierter Parametersatz des Antriebszwillings erhalten wird, |
| S7: | das Antriebssystem des Gesamtsystems gemäß dem optimierten Parametersatz ausgelegt wird. Dabei wird ein optimiertes Antriebssystem für die Steuerstrecke festgelegt/geschaffen. |

Das Antriebssystem beeinflusst die Steuerstrecke unmittelbar. Das umfasst auch die Fälle, in welchen das Antriebssystem als "Störer" der Steuerstrecke fungiert. Insbesondere kann dies der Fall bei Netzrückwirkungen (leitungsgebundenen EMV) sein. Diese sind nach diversen Normen und Richtlinien zu bewerten (bspw. DIN 61000-4-7). In einem solchen Fall kann das hier beschriebene Verfahren verwendet werden, um die Konformität gegenüber solchen Normen nachzuweisen. In diesem Kontext stört das Antriebssystem, beispielsweise der Umrichter das Netz, wobei nachgewiesen werden soll, dass man unter bestimmten Störpegeln ist, um den Nebeneffekt des Einflusses des Antriebssystems auf das Netz in Kauf zu nehmen.

Die Verknüpfung des Antriebszwillings mit dem Streckenmodell kann beispielsweise in einem Auslegungs-, Simulations-, Engineeringtool erfolgen.

Nach der Verknüpfung kann grundsätzlich Simulation eines gesteuerten Betriebs erfolgen (Antriebssystem steuert den Prozess), bei welchem das Antriebssystem beispielsweise die Temperatur einer Umgebung beeinflusst oder im U/f Betrieb betrieben wird.

Nach der Verknüpfung kann der Antriebszwilling mit dem Streckenmodell Daten austauschen und beispielsweise als Regelschleife wirken. Hierdurch kann ein geregelter Betrieb simuliert werden.

Bei einer Ausführungsform kann es vorgesehen sein, dass mehrere Antriebssysteme ausgelegt werden, wobei mehrere Antriebszwillinge miteinander und/oder mit dem Streckenmodell verknüpft werden können. Dabei kann es vorgesehen sein, dass unterschiedliche Antriebssysteme unterschiedliche Prozesse steuern und insbesondere regeln sollen, wobei die Prozesse sich gegenseitig beeinflussen können.

Zusammenfassend kann der Gesamtzwilling eine Mehrzahl von Antriebszwillingen und Streckenmodellen umfassen, die miteinander auf eine bestimmte, durch das Anwendungsszenario definierte Weise verknüpft sind.

Vorzugsweise ist ein Antriebssystem als eine elektronische Regelungseinheit, beispielsweise als ein Umrichter, insbesondere als ein Frequenzumrichter, ausgebildet.

Bei einer Ausführungsform kann es vorgesehen sein, dass das Antriebssystem zusätzlich eine elektrische rotatorische Maschine, vorzugsweise an einen Elektromotor, beispielsweise einen Synchronmotor (wegen einer höheren Dynamik) oder Asynchronmotor umfasst.

Insbesondere kann es vorgesehen sein, dass die elektronische Regelungseinheit an die elektrische rotatorische Maschine gekoppelt ist, um diese mit Strom und Spannung mit bestimmten vorgebbaren Charakteristika (Amplitude, Frequenz, etc.) zu versorgen. Solche Antriebssysteme (elektronische Regelungseinheit und elektrische rotatorische Maschine) sind im Bereich der Automatisierungstechnik hinlänglich bekannt und dienen beispielsweise dazu, mechanische Einrichtungen einer Automatisierungsanlage in Bewegung zu setzen. Hierzu können die Antriebssysteme Achsen einer Werkzeugmaschine oder eines Robotearms, Pumpen (Hydraulikantrieb), Förderbänder, etc. antreiben, weshalb sie oft auch als "Antriebe" bezeichnet werden.

Mit anderen Worten werden Antriebsstränge vielseitig eingesetzt. Eine nichtabschließende Aufzählung der Anwendungen umfasst Bewegungsführung; elektromechanische Antriebssysteme in einer Werkzeugmaschine; Antrieb der Werkzeugmaschine; DC Motor Anwendung am Zwischenkreis; Batteriemanagement; netzseitige Anwendungen, um z.B. richtige Auslegung der Netzfilter zu erzielen und viel mehr. Die elektronische Regelungseinheit, beispielsweise der Umrichter kann dann geregelt, gesteuert oder als Störer in diese Prozesse wirken. Ein entsprechendes Optimum kann man in jeden dieser Szenarien simulativ mit dem Digital Twin untersuchen und eine optimale Regel- /Steuerstrategie oder minimale Störeinwirkung etc. ermitteln.

Der Anfangspunkt der Auslegung (erste grobe Auslegung, erste Auslegungsstufe), die zur Ermittlung des Startparametersatzes führt, kann ein Umgebungsmodell (speicherprogrammierbare Steuerung (SPS), Applikation (Mechanik), Versorgungsnetz, andere Antriebe, DC Schiene / DC Applikation, Kühlungsmedium...) in einer zeitbasierter Simulationssprache sein (optional in Auslegungstool integriert), um eine simulationsprogrammatische Problembeschreibung zu ermöglichen. Welche Teile konkret im Umgebungsmodell und welche im auszulegenden Objekt des Antriebssystems liegen, kann offengehalten werden. Beispielsweise kann auch die SPS im Antriebszwilling liegen und in verschiedenen Abstraktionsstufen (beispielsweise als Fuzzy Logic...) hinterlegt sein.

Bei einer Ausführungsform kann es vorgesehen sein, dass Schritte S3 bis S7 zumindest einmal wiederholt werden. Dabei wird der optimierte Parametersatz bei jeder Wiederholung als Anfangs- beziehungsweise Startparametersatz verwendet - nächste oder zweite Auslegungsstufe. Insbesondere kann damit ein mathematisches Optimierungsverfahren genutzt werden für die Auslegung, wenn diese als ein Optimierungsproblem einer mehrdimensionalen Funktion dargestellt wird.

Bei einer Ausführungsform kann es vorgesehen sein, dass bei unterschiedlichen Wiederholungen (in unterschiedlichen Auslegungsstufen) hinsichtlich unterschiedlicher Optimierungsziele optimiert wird.

Bei jeder Wiederholung kann es zweckmäßig sein, wenn der Antriebszwilling und vorzugsweise die Simulationsmodelle mit dem gleichen oder einem ebenfalls detaillierteren Umgebungsmodell simuliert und hinsichtlich definierbarer Gütekriterien überprüft werden. Dies kann je nach Zielkriterium nötig sein.

Zudem kann es (während des hier beschriebenen iterativen Auslegungsprozesses) Hinweise zur Änderung des Umgebungsmodells geben, um hinsichtlich Optimierungskriterien des Gesamtzwillings eine bessere Güte zu erzielen (beispielsweise Empfehlung Last- oder Verfahrprofil zu ändern o.Ä.). Hierfür kann es zweckmäßig sein zu definieren, welche Parameter des umgebenden Modells mit Toleranzen behaftet sind.

Bei einer Ausführungsform kann es vorgesehen sein, dass der Antriebszwilling hinsichtlich seines Detaillierungsgrads und/oder das Streckenmodell hinsichtlich seines Detaillierungsgrads konfigurierbar sind/ist, wobei unmittelbar vor beziehungsweise bei dem Optimieren der Detaillierungsgrad des Antriebszwillings und/oder des Streckenmodells geändert wird, wobei vorzugsweise Anzahl und/oder Typ der Anschlussstellen und/oder Abtastraten einstellbar sind.

Der Detaillierungsgrad eines Modells bezieht sich auf die Menge und Genauigkeit der Informationen, die in das Modell integriert werden. Ein hochdetailliertes Modell enthält eine große Menge an Informationen, die spezifisch und detailliert sind, während ein geringfügig detailliertes Modell nur grundlegende Informationen enthält.

Ein Modell mit höherem Detaillierungsgrad ist in der Regel komplexer und genauer, da es mehr spezifische Variablen und Faktoren berücksichtigt. Allerdings kann ein höherer Detaillierungsgrad auch zu höheren Rechenaufwänden führen und das Modell möglicherweise schwieriger zu verstehen und zu interpretieren machen.

Der Detaillierungsgrad hängt grundsätzlich von der Anwendung des Modells ab und davon, welche Informationen für das spezifische Problem relevant sind. In manchen Fällen kann ein geringfügig detailliertes Modell ausreichend sein, während in anderen Fällen ein höherer Detaillierungsgrad notwendig ist, um genaue Ergebnisse zu erzielen.

Vorliegend kann es also vorgesehen sein, dass die Detaillierung des Antriebszwillings und/oder des Streckenmodells an jede Auslegungsstufe angepasst wird. Dies kann wahlweise die Vertiefung (wenn mehr Details erforderlich sind) aber auch die Vergröberung von Teilaspekten (wenn es auf Details gerade nicht ankommt) bedeuten.

Beispielsweise kann es vorgesehen sein, dass der Detaillierungsgrad des Streckenmodells (vor oder bei dem Optimieren) durch Zuführen von Zusatzinformationen (beispielsweise Details zur Masseverteilung im Antriebstrang, Verlustwiderständen in den Leitungen, Strömungskanäle in der Kühlung, etc.) erhöht wird. Dabei findet eine Verfeinerung des Streckenmodells statt. Der Informationsbedarf und somit auch die Menge der Zusatzinformationen kann dabei abhängig von der vorherigen Auslegungsstufe sein.

Dabei kann es zweckdienlich sein, wenn der Antriebszwilling hinsichtlich seines Detaillierungsgrads und das Streckenmodell hinsichtlich seines Detaillierungsgrads konfigurierbar sind und wobei bei dem Optimieren der Detaillierungsgrad des Antriebszwillings an den Detaillierungsgrad des Streckenmodells oder umgekehrt angepasst wird.

Bei einer Ausführungsform kann es vorgesehen sein, dass der Antriebszwilling mehrere parametrierbare, miteinander verknüpfbare, aufeinander abstimmbare oder miteinander kompatible Simulationsmodelle umfasst.

Es kann auch vorgesehen sein, dass bei jedem Simulationsmodell, z.B. in den entsprechenden Domänen, der Detaillierungsgrad angepasst werden kann.

Aufeinander abstimmbare oder miteinander kompatibel bedeutet vorliegend unter anderem, dass, wenn diese Simulationsmodelle miteinander verknüpft werden, bestimmte Werte vorbelegt werden. Dabei können sich die Schwellenwerte ändern, oder bestimmte Parameter andere Toleranzgrenzen aufweisen.

Bei einer Ausführungsform kann es vorgesehen sein, dass unterschiedliche Simulationsmodelle unterschiedlichen Simulationsdomänen zugeordnet sind.

Bei einer Ausführungsform kann es vorgesehen sein, dass jedes Simulationsmodell ein stationäres (zeitunabhängig) oder dynamisches (zeitbasiert) Simulationsmodell ist.

Bei einer Ausführungsform kann es vorgesehen sein, dass das Simulationsmodell ein thermisches Simulationsmodell, ein elektrisches Simulationsmodell, ein mechanisches Simulationsmodell, ein magnetisches Modell, ein akustisches Modell, ein informationstechnisches, beispielsweise ein informationselektromagnetisches oder ein regelungstechnisches Modell oder eine Kombination davon ist. Insbesondere kann das Simulationsmodell als eine Kombination von einem informationselektromagnetischen Modell und einem geschlossenen Stromregelkreis ausgebildet sein.

Die Auswahl des passenden Antriebszwillings beziehungsweise der passenden Simulationsmodelle, z.B., bei der Grobauslegung kann anhand der Schnittstellen und der bekannten Informationen erfolgen. Diese Auswahl kann auf einer Knowledge Base von bestehenden Auslegungen unter ähnlichen Randbedingungen (mit Angabe des Erfüllungsgrads) erfolgen (beispielsweise durch generative neuronale Netze).

Es kann vorgesehen sein, dass mehrere Varianten des Antriebszwillings (z.B. parallel) untersucht werden. Dabei können verschiedene Motorvarianten, Umrichtergrößen, SW-Optionen, etc. untersucht werden, welche den vorgegebenen Randbedingungen genügen, die durch das Streckenmodell vorgegeben sind. Die Steuerung der Variation kann über bekannte Methoden der globalen nichtlinearen Optimierung mit Nebenbedingungen erfolgen (bspw. naturanaloge Verfahren (evolutorische, schwarmbasierte Algorithmen)). Z.B. kann durch Variationen einer Start-Auslegung (verschiedene Startparametersätze) und Anwendung eines genetischen Algorithmus in mehreren Schritten eine neue Start-Auslegung (optimierter Startparametersatz) gefunden werden, mit der in die nächste Detaillierungsstufe (Auslegungsstufe) gegangen werden kann. Mit anderen Worten kann diese Auslegung bis zu einem Abbruchkriterium erfolgen (beispielsweise Antriebsauswahl ändert sich nicht weiter), um verschiedene Szenarien des umgebenden Systems abzudecken. Der ermittelte optimierte Startparametersatz kann im Anschluss in den Antriebszwilling übertragen werden, wodurch ein Antriebszwilling eines höheren Detaillierungsgrades erzeugt wird. Es können auch mehrere dieser higher-level-of-detail DTs existieren, die parallel stehen (bspw. unterschiedliche Simulationsdomänen) oder seriell (bspw. immer höherer Detailgrad) aufeinander aufbauen.

Bei einer Ausführungsform kann es vorgesehen sein, dass die Steuerstrecke zusätzlich zumindest eine Rückführung aufweist.

Steuerung ist eine Regelung ohne Rückführung. Eine Rückführung (auch Feedback genannt) in der Regelungstechnik bezieht sich auf den Prozess, bei dem ein Teil des Ausgangssignals eines Systems zurückgeführt wird, um das Eingangssignal zu modifizieren und somit das Verhalten des Systems zu regulieren. Konkret bedeutet dies, dass das Ausgangssignal des Systems (z.B. die Geschwindigkeit eines Motors) mit einem Sollwert verglichen wird, der vom Benutzer oder durch das System selbst festgelegt wird. Falls eine Abweichung zwischen dem Ausgangssignal und dem Sollwert besteht, wird ein Fehler erkannt, und ein Korrektursignal wird generiert und auf das Eingangssignal des Systems angewendet. Das Ergebnis ist ein Regelkreis, der das Verhalten des Systems kontinuierlich anpasst, um den Sollwert zu erreichen und aufrechtzuerhalten.

Bei einer Ausführungsform kann es vorgesehen sein, dass die Simulationsergebnisse Informationen über ein Interaktionsverhalten des Antriebszwillings mit dem Streckenmodell umfassen.

Mit anderen Worten, erzeugt die Simulation des Gesamtzwillings als Ergebnis Informationen über das Interaktionsverhalten des Antriebszwillings mit der Umgebungsmodell (Streckenmodell). Diese Informationen können beispielsweise ein Belastungsprofil des Antriebs, die Auswirkung unterschiedlicher Mehrachsbetriebe auf eine oder parallele Einspeisungen und das umgebende System.

Diese Informationen beziehungsweise das Interaktionsverhalten kann als Grundlage für die nachfolgenden Auslegungsschritte dienen.

Es kann vorgesehen sein, dass der Auslegungsprozess, beispielsweise bei jeder Auslegungsstufe, eine Rückmeldung gibt, wie weit der Antriebszwilling noch verfeinerbar ist.

Die vorgenannte Simulation (des Gesamtzwillings oder seiner Teile) kann auf externen Ressourcen erfolgen z.B. auf einer Cloud-Plattform. Hier können vorteilhaft Varianten parallel gerechnet werden, ohne den Zeitaufwand in die Höhe zu treiben.

Zusammenfassend macht sich das offenbarte Verfahren unterschiedliche Detailstufen von Antriebszwillingen zunutze, um hinsichtlich vorgebbarer Optimierungskriterien eine Lösung für ein vorgegebenes Problem anzubieten. Der Auslegungsprozess über Variantenbildung kann zusätzlich in eine iterative Detaillierung des Modells eingebunden werden kann.

Die Erfindung wird nachfolgend anhand von Ausführungsbeispielen näher erläutert. Dabei zeigen:
- FIG 1: ein System zum Auslegen eines Antriebssystems,
- FIG 2: ein Flussdiagramm eines Verfahrens zum Auslegen eines Antriebssystems, und
- FIG 3: mögliche Ausführungsforme des Optimierungsschrittes der FIG 2.

Die in den Figuren verwendete Bezugszeichen dienen ausschließlich zur Verbesserung der Lesbarkeit und sind nicht als einschränkend auszulegen. Die gleichen Bezugszeichen in unterschiedlichen Figuren bezeichnen im Wesentlichen gleiche Elemente beziehungsweise Gegenstände.

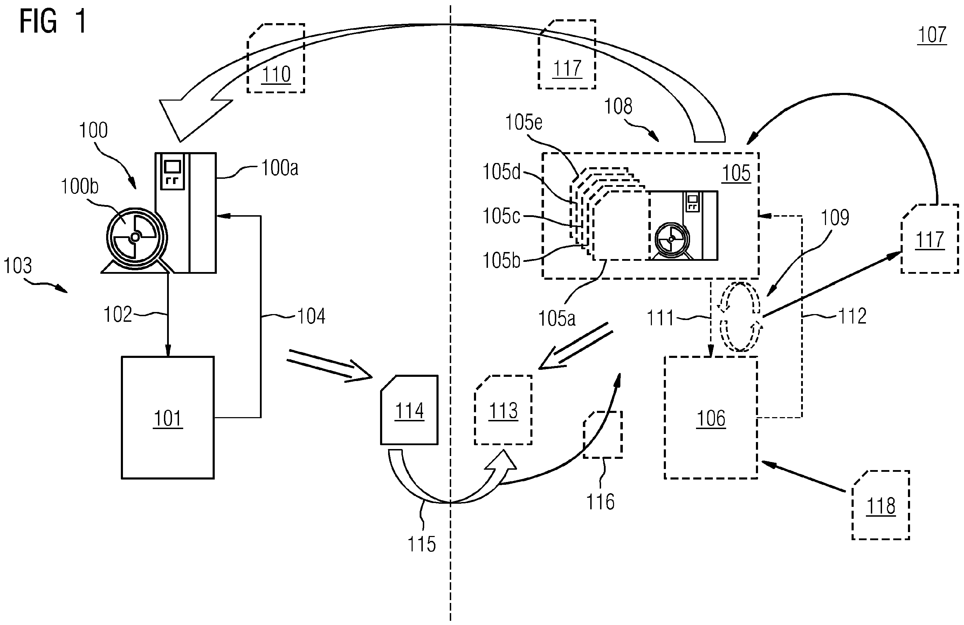

FIG 1 zeigt ein (noch nicht ausgelegtes) Antriebssystem 100, welches Teil eines Automatisierungssystems (hier nicht gezeigt) werden soll (nach der Auslegung). Das Antriebssystem 100 kann als eine elektronische Regelungseinheit 100a, beispielsweise ein Umrichter, insbesondere ein Frequenzumrichter, ausgebildet sein.

Außerdem kann das Antriebssystem 100 zusätzlich eine elektrische rotatorische Maschine 100b, vorzugsweise einen Elektromotor, beispielsweise einen Asynchronmotor umfassen.

Dabei kann die elektronische Regelungseinheit mit der elektrischen rotatorischen Maschine verbunden sein, um diese mit Strom und Spannung mit bestimmten einstellbaren Charakteristika (Amplitude, Frequenz, etc.) zu versorgen und dadurch beispielsweise ihr Drehmoment auf das erforderliche Niveau zu reduzieren oder zu erhöhen, um die Anforderungen der Anwendung zu erfüllen.

Solche Antriebssysteme können beispielsweise Achsen einer Werkzeugmaschine oder eines Roboterarms, Pumpen (Hydraulikantrieb), Förderbänder, etc. antreiben, weshalb sie oft auch als "Antriebe" oder "Antriebsstränge" bezeichnet werden.

Das Antriebssystem 100 beeinflusst unmittelbar einen (realen) vorgegebenen Prozess 101. In der Regelungstechnik wird ein Prozess oft als Synonym zum Begriff Steuerstrecke verwendet.

Die Anwendung kann dabei zum Beispiel eine Unterstützung einer Inbetriebnahme, eine Unterstützung einer Diagnose, eine Unterstützung von Trainingsmaßnahmen etc. sein.

Die unmittelbare Einwirkung des Antriebssystems 100 auf den Prozess 101 ist mit einem Pfeil 102 verdeutlicht.

Gemeinsam bilden das Antriebssystem 100 und der Prozess 101 ein Gesamtsystem 103.

Zusätzlich beziehungsweise optional kann der Prozess 101 eine Rückführung 104 aufweisen. Eine Steuerung (Steuerstrecke) mit einer Rückführung wird Regelung (Regelungsstrecke beziehungsweise Regelungsschleife) genannt.

Um beispielsweise noch vor einer Inbetriebnahme des Automatisierungssystems Kenntnisse über die Anforderungen zu erlangen, die von dem Prozess 101 an das Antriebssystem 100 gestellt werden, zu erlangen, können digitale Zwillinge verwendet werden.

Vorliegend werden ein digitaler Zwilling des Antriebssystems 100 - ein Antriebszwilling 105 und ein Modell der Steuerstrecke 101 - das Streckenmodell 106 bereitgestellt. Diese sind vorzugsweise als beispielsweise getrennte Software-Bausteine ausgeführt, die miteinander, beispielsweise über FMI (Functional Mock-Up Interface) miteinander verknüpfbar sind.

Eine Verknüpfung kann beispielsweise in einem Konfigurations- /Parametrierungstool beziehungsweise einem Auslegungstool beziehungsweise einem Engineering-Tool 107 einer Engineering-Plattform vorgenommen werden. Durch die Verknüpfung wird ein digitaler Zwilling des Gesamtsystems 103 - der Gesamtzwilling 108 - erzeugt.

Die Verknüpfung ist dabei keine reine applikative Verbindung, sondern ermöglicht einen Datenaustausch 109 zwischen den Modellen, d.h., zwischen dem Antriebszwilling 105 und dem Streckenmodell 106.

Die Auswahl des Antriebszwillings 105 kann beispielsweise anhand der Schnittstellen und der bekannten Informationen betreffend den vorliegenden Anwendungsfall erfolgen. Diese Auswahl kann auf einer Knowledge Base von bestehenden Auslegungen unter ähnlichen Randbedingungen (mit Angabe des Erfüllungsgrads) beispielsweise unter Verwendung von generativen neuronalen Netzen erfolgen.

Das Ziel der Auslegung ist, ein für den Prozess 101 passendes Antriebssystem 100 zu finden.

Das Streckenmodell 106 ist durch die Anwendung beziehungsweise durch den Prozess 101 vorgegeben. Dabei kann das Streckenmodell 106 eine oder mehr von folgenden Anwendungen beschreiben: SPS, Applikation (z.B. Mechanik), Versorgungsnetz, andere Antriebe, DC-Schiene, Kühlungsmedium, und viel mehr.

Vorzugsweise liegt das Streckenmodell 106 in einer zeitbasierten Simulationssprache (optional im Auslegungstool 107 integriert) vor, um eine simulationsprogrammatische Problembeschreibung zu ermöglichen.

Sowohl der Arbeitszwilling 105 als auch das Streckenmodell 106 sind konfigurierbar.

Der Antriebszwilling 105 kann mehrere parametrierbare, miteinander verknüpfbare, und aufeinander abstimmbare Simulationsmodelle 105a, 105b, 105c, 105d, 105e umfassen, wobei unterschiedliche Simulationsmodelle 105a bis 105e vorzugsweise unterschiedlichen Simulationsdomänen zugeordnet sind. Der Antriebszwilling 105 kann also beispielsweise eines oder mehrere von folgenden Modellen 105a bis 105e umfassen: thermisches Simulationsmodell, elektrisches Simulationsmodell, mechanisches Simulationsmodell, informationstechnisches Modell (zum Simulieren von Regelung, Logik, Datenvor-/nachverarbeitung, ...), ein magnetisches Modell, ein akustisches Modell. Insbesondere kann das Simulationsmodell als eine Kombination des informationselektromagnetischen Modells und eines geschlossenen Stromregelkreises ausgebildet sein.

Dabei bedeutet "aufeinander abstimmbar" vor allem, dass, wenn verschiedene Simulationsmodelle miteinander verknüpft werden, bestimmte Werte der Parameter der Simulationsmodelle 105a bis 105e aufeinander abgestimmt und entsprechend vorbelegt werden. Im Vergleich zu den nicht verknüpften Simulationsmodellen 105a bis 105e kann dies beispielsweise bedeuten, dass bestimmte Parameter andere Schwellenwerte und/oder Toleranzgrenzen aufweisen.

Jedes Simulationsmodell 105a bis 105e kann als ein statisches (zeitunabhängiges) oder als ein dynamisches Simulationsmodell, welches eine zeitbasierte Simulation ermöglicht, ausgeführt sein. Dabei kann beispielsweise eine Betrachtung von Drehzahlregelungsverhalten oder Netzoberschwingungen ermöglicht sein.

Die Auswahl der passenden Simulationsmodelle 105a bis 105e kann, wie die oben beschriebene Auswahl des Antriebszwillings 105, anhand der Schnittstellen und der bekannten Informationen zu dem Prozess 101 oder zu dem Streckenmodell 106 erfolgen. Diese Auswahl kann auf einer Knowledge Base von bestehenden Auslegungen unter gleichen oder ähnlichen Randbedingungen (vorzugsweise mit Angabe des Erfüllungsgrads), beispielsweise mit Hilfe von generativen neuronalen Netzen erfolgen.

Der Antriebszwilling 105 kann darüber hinaus hinsichtlich seines Detaillierungsgrads konfigurierbar sein. Dies bedeutet, dass beispielsweise auch jedes vom Antriebszwilling 105 umfasste Simulationsmodell 105a bis 105e in seinem Detail konfiguriert werden kann. Dabei kann beispielsweise die Anzahl und/oder der Typ der Anschlussstellen und/oder die Abtastraten einstellbar sein.

Außerdem kann auch das Streckenmodell 106 hinsichtlich seines Detaillierungsgrads konfigurierbar sein.

Mit anderen Worten können/kann der Antriebszwilling 105 und/oder das Streckenmodell 106 derart ausgebildet sein, dass ihre Verfeinerung oder Vergröberung jederzeit vorgenommen werden kann.

Insbesondere kann der Detaillierungsgrad des Antriebszwillings 105 and den Detaillierungsgrad des Streckenmodells 106 oder umgekehrt angepasst werden.

Zusammenfassend wird beim Verknüpfen zunächst der Antriebszwilling 105 parametriert. Dabei können ein oder mehrere zu dem Streckenmodell passende 106 Simulationsmodelle 105a bis 105e im Antriebszwilling 105 gewählt werden. Hierdurch wird ein Startparametersatz 110 des Antriebszwillings 105 festgelegt. Der Startparametersatz 110 kann unmittelbar zur Auslegung des Antriebssystems 100 verwendet werden. Mit anderen Worten kann mit der ersten Verknüpfung eine erste "Grobauslegung" des Antriebs 100 stattfinden.

Eine mögliche Initialparametrierung kann sich beispielsweise aus automatischen Reglereinstellungen (und gegebenenfalls mit gezielten Zusatzeingaben) ergeben (beispielsweise One-Button-Tuning).

Mit anderen Worten soll der Fokus im ersten Schritt der Grobauslegung auf die Realisierung der gewünschten Funktion des Anwendungsszenarios gelegt werden, nicht aber die Beschränkungen des potenziellen Lösungsportfolios.

Dabei können von dem Antriebszwilling 105 ein oder mehrere low-level-of-detail Modelle 105a bis 105e (generischer digitale Zwillinge) ausgewählt und in jenem Umfang parametriert werden, der vom Antriebssystem 100 bekannt ist.

Mit dem (nun parametrierten) Gesamtzwilling 108 ist eine Simulation des Gesamtsystems 103 möglich. Eine Simulation, bei welcher der Einfluss 102 des Antriebssystems 100 auf den Prozess 101 und vorzugsweise auch die Rückführung 104 simuliert werden (Pfeile 111, 112), wird durchgeführt und dadurch Simulationsergebnisse 113 erhalten. Dabei können eine oder mehrere geschlossene Regelungsschleifen 112 simuliert werden. Die Simulationsergebnisse 113 können beispielsweise in Form von einer Lastkurve beziehungsweise mehreren Lastkurven für tatsächliche Last über der Zeit vorliegen.

Dabei können, ermöglicht durch die Wählbarkeit und/oder die Konfigurierbarkeit des Antriebszwillings 105 und seiner Simulationsmodelle 105a bis 105e, mehrere Varianten (beispielsweise parallel) untersucht werden. Hierzu können beispielsweise Motorvarianten, Umrichtergrößen, (Firmen-)Software-Optionen variiert werden, welche den vorgegebenen Randbedingungen, die in dem vorgegebenen Prozess 101 beziehungsweise Streckenmodell 106 verankert sind, genügen. Die Steuerung der Variation kann über bekannte Methoden der globalen nichtlinearen Optimierung mit Nebenbedingungen erfolgen (beispielsweise naturanaloge Verfahren (evolutorische, schwarmbasierte Algorithmen)). Z.B. kann durch Variieren der Start- bzw. Grobauslegung und Anwendung eines genetischen Algorithmus in mehreren Schritten eine neue Start-Auslegung gefunden werden, mit der in die nächste Detaillierungsstufe gegangen werden kann.

Die Simulation des Antriebszwillings 105 (oder seiner Teile 105a bis 105e) oder auch des Gesamtzwillings 108 kann intern, d.h. innerhalb der Automatisierungsanlage, oder auf externen Ressourcen erfolgen, z.B. unter Verwendung einer Cloud-Infrastruktur. Hier bei können vorteilhaft Varianten parallel gerechnet werden, ohne den Zeitaufwand in die Höhe zu treiben.

Die Simulationsergebnisse 113 können Informationen über das Interaktionsverhalten des Antriebszwillings 105 mit dem Streckenmodell 106 umfassen. Diese können zumindest eines enthalten von: Belastungsprofil des Antriebs; die Auswirkung unterschiedlicher Mehrachsbetriebe auf eine oder parallele Einspeisungen und das umgebende System, usw.

Dieses Interaktionsverhalten kann die Grundlage für die nachfolgenden Auslegungsschritte bilden (vgl. unten).

Alternativ oder zusätzlich kann das Interaktionsverhalten dazu verwendet werden, um eine Auswirkung der Änderung des Streckenmodells 106 auf den Antriebszwilling 105, d.h. auf seine Parametrierung, zu untersuchen.

Mit anderen Worten kann eine low-level Simulation (Grobauslegung) des Gesamtzwillings 108 angestoßen und bis zu einem bestimmten Abbruchkriterium ausgeführt, beispielsweise, bis sich die Antriebsauswahl (die Parametrierung des Antriebszwillings 105) nicht weiter ändert. Damit werden verschiedene Szenarien des umgebenden Systems 106 abgedeckt. Dabei ist es nicht notwendig, sich nur auf einen wiederum erfahrungswertabhängigen Worst-Case einzuschränken, sondern den Lösungsraum bewusst offen zu halten. Die hierdurch erzielte Parametrierung kann als Startparametersatz 110 verwendet werden, um beispielsweise den Antriebszwilling 105 neu zu parametrieren.

Anschließend oder parallel zu der Simulation wird auch das Verhalten des Gesamtsystems 103 untersucht, wobei das Antriebssystem 100 des Gesamtsystems 103 gemäß dem Startparametersatz 110 ausgelegt wurde. Dabei werden reale (experimentelle) Daten 114 über das Verhalten des Gesamtsystems 103 erhoben.

Die Simulationsergebnisse 113 werden mit den Daten 114, die das Verhalten des Gesamtsystem 103 charakterisieren, verglichen 115.

In der Regel weicht das Verhalten des Gesamtsystem 103 bei der ersten Grobauslegung von dem Verhalten des Gesamtzwillings 108 ab.

Der Abweichung kann allerdings eine Erkenntnis darüber abgewonnen werden, welche Aspekte des Gesamtzwillings 108 und insbesondere des Antriebszwillings 103 optimierungsbedürftig sind.

Der Antriebszwilling 105 kann also hinsichtlich eines vorgegebenen Optimierungsziels 116 optimiert werden. Hierdurch wird ein optimierter Parametersatz 117 des Antriebszwillings 105 erhalten, der zur Auslegung des Antriebssystems 100 dienen kann.

Die Optimierung kann hinsichtlich verschiedener Optimierungskriterien oder gewichteter Einzelkriterien erfolgen, wie z.B. :
- Kosten,
- Regelgenauigkeit,
- Regelgüte
- Performanz, insbesondere im Sinne von Durchsatz, Einstelldauer einer Regelgröße,
- Energieverbrauch,
- Konsequenzen für die Peripherie (verfügbare Schnittstellen für Hilfsgrößen (bspw. Kühlung oder Spannungsebenen)),
- Platzverbrauch, insbesondere kumulierter Platzverbrauch,
- Erscheinungsjahr,
- prospektive Lebensdauer,
- prospektive Wartungsintensivität,
- EMV-Klasse,
- sonstige Normenklassen,
- etc.

Diese Kriterien können auch kombiniert und mit (unterschiedlichen) Gewichtungen belegt werden.

Als Ergebnis seien beispielsweise eine detaillierte BOM (Bill of Materials) oder das vorinbetriebgenommene Projekt für die Übertragung in das reale Antriebssystem 100 zu nennen.

Unmittelbar vor oder bei dem Optimieren kann der Detaillierungsgrad des Antriebszwillings 105 und/oder des Streckenmodells 106 geändert werden.

Beispielsweise kann der Detaillierungsgrad des Antriebszwillings 105 oder auch der Simulationsmodelle 105a bis 105e basierend auf dem Umgebungsmodell 106 automatisch gewählt werden.

Insbesondere ist eine Verfeinerung (wenn mehr Details erforderlich sind) oder eine Vergröberung (wenn es auf bestimmte Details gerade nicht ankommt) des Antriebszwillings 105 und/oder des Streckenmodells 106 möglich. Dabei kann eine Optimierung bestimmter Bestandteile des Antriebszwillings 105, beispielsweise des Umrichter-Modells und/oder des Modells der elektrischen rotatorischen Maschine und deren Betriebs erfolgen, um den Antriebszwilling 105 besser an das Streckenmodell 106 anzupassen.

Außerdem kann es zweckdienlich sein, das Streckenmodell 106 (vor oder bei dem Optimieren) durch Zusatzinformationen 118 (beispielsweise Details zur Masseverteilung im Antriebstrang, Verlustwiderständen in den Leitungen, Strömungskanäle in der Kühlung, etc.) anzureichern beziehungsweise mit den Zusatzinformationen 118 zu verfeinern. Außerdem kommt als Zusatzinformationen hier beispielsweise ein kalibriertes Modell beispielsweise mit Hilfe von Felddaten oder ein Modell von Komponentenlieferanten in Betracht.

Der optimierte Parametersatz 117 wird anschließend zur Auslegung des Antriebssystems 100 verwendet. Hierdurch wird optimiertes beziehungsweise optimiert ausgelegtes Antriebssystem 100 für die Steuerstrecke 101 erhalten.

Der optimierte Parametersatz 117 (eine Kopie davon) kann auch für eine spätere Nutzung im Betrieb gespeichert werden. Dabei kann der optimierte Parametersatz 117 beispielsweise in den Antriebszwilling 105 oder in einen anderen digitalen Zwilling übertragen werden, um diesen digitalen Zwilling später, beispielsweise in Betrieb zu verwenden.

Mit anderen Worten liegt nun ein Antriebssystem 100 in einer nächsten Auslegungsstufe vor. Wenn die optimierten Parameter 117 in den Antriebszwilling 105 oder in einen anderen digitalen Zwilling übertragen werden, erhält man einen higher-level-of-detail digitalen Zwilling, der gegebenenfalls im Rahmen einer (automatisierten) Inbetriebsetzung das Antriebssystem 100 parametrieren kann. Es können auch mehrere dieser higher-level-of-detail digitale Zwillinge erzielt werden, die gleichzeitig/nebeneinander verwendbar sein (beispielsweise als unterschiedliche Simulationsdomänen) oder seriell (beispielsweise immer höherer Detailgrad) aufeinander aufbauen können.

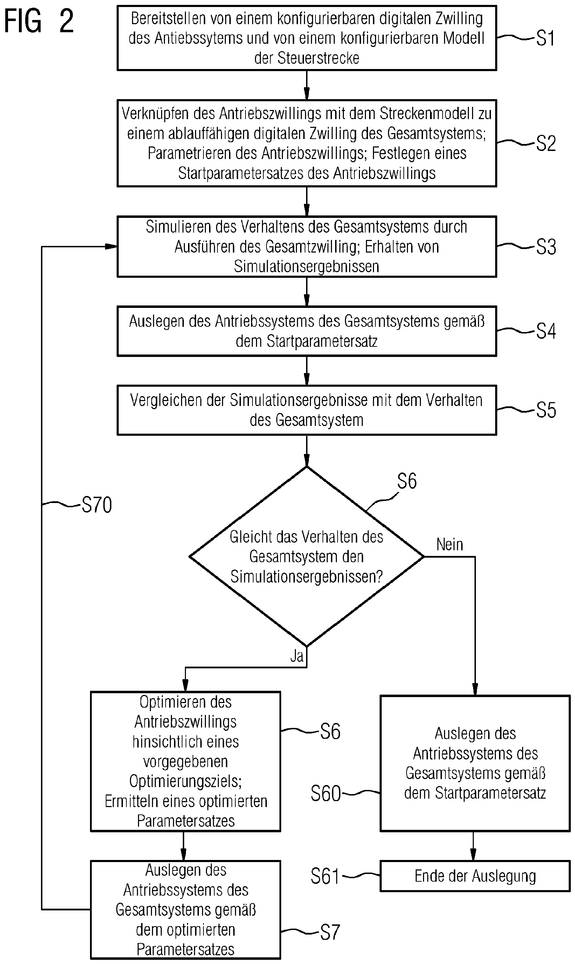

Die vorgenannten Schritte - Simulieren, Testen, Optimieren, Ergebnisse der Optimierung an das Antriebssystem 100 übertragen - können beliebig oft wiederholt werden (siehe S70 in FIG 2). Dabei wird der optimierte Parametersatz aus der vorherigen Auslegungsstufe bei als Anfangsparametersatz verwendet.

Außerdem kann bei jeder Wiederholung das Optimierungsziel neu festgelegt werden. Darüber hinaus kann der Detaillierungsgrad des Antriebszwillings 105 und/oder des Streckenmodells 106 verändert oder angepasst werden. So kann bei unterschiedlichen Wiederholungen hinsichtlich unterschiedlicher Optimierungsziele optimiert werden. Dabei kann der Informationsbedarf für den Antriebszwilling 105 und/oder für das Streckenmodells 106 von der vorherigen Auslegungsstufe abhängen.

Bei jeder Wiederholung kann es zweckmäßig sein, wenn der Antriebszwilling 105 und vorzugsweise die Simulationsmodelle 105a bis 105e mit dem gleichen oder einem ebenfalls detaillierteren Umgebungsmodell 106 simuliert und hinsichtlich definierbarer Gütekriterien überprüft werden. Dies kann je nach Zielkriterium nötig sein.

Auf Basis der Ergebnisse aus der Wiederholung kann der Auslegungszyklus iterativ weiter verfeinert werden, bis ein entsprechendes Abbruchkriterium verfügbar ist.

Zudem kann als Ergebnis der Simulation mit dem Gesamtzwilling 108 Hinweise zur Änderung des Umgebungsmodells 106 geben, um hinsichtlich der Optimierungskriterien des Gesamtzwillings 108 eine bessere Güte zu erzielen (beispielsweise Empfehlung Änderung des Lastprofils, der Eigenschaften des Verfahrprofils o.Ä.). Hierfür kann es zweckmäßig sein zu definieren, welche Parameter des umgebenden Modells mit Toleranzen behaftet sind (Probablistic Design /Stochastischer Ansatz Sören).

Mit dem iterativen Ansatz zur Bewertung von alternativen Varianten eines Systems kann auch eine Sensitivitätsanalyse erfolgen, mit deren Ergebnis auch Trade-off Bewertungen auf der Anforderungsseite vorgenommen werden können. Dadurch kann im Portfolio ein verbessertes Angebot definiert werden. Z.B. "Wenn die Toleranz für den Wert "x" erniedrigt werden kann, dann sinkt der Energieverbrauch um "y" - ist dies im Portfolio eine Option?"

FIG 2 zeigt ein Flussdiagramm eines Auslegungsverfahrens für ein Antriebssystem, beispielsweise für das Antriebssystem 100. Insofern kann FIG 2 als eine Zusammenfassung der bereits im Zusammenhang mit FIG 1 beschriebenen Schritte.

In einem Schritt S1 werden ein konfigurierbarer digitaler Zwilling des Antriebssystems 100 - der Antriebszwilling 105 - und ein konfigurierbares Modell der Steuerstrecke 101 - das Streckenmodell 106 - bereitgestellt.

In einem Schritt S2 erfolgt die Verknüpfung des Antriebszwillings 105 mit dem Streckenmodell 106 zu einem ablauffähigen digitalen Zwilling des Gesamtsystems 103 - dem Gesamtzwilling 108. Verknüpfen heißt dabei, dass die Zwillinge Daten austauschen können. Beim Verknüpfen wird der Antriebszwilling 105 parametriert. Nach der Parametrierung liegt ein Startparametersatz 110 des Antriebszwillings 105 vor, der als erste Grobauslegung des Antriebssystems 100 fungieren kann.

In einem Schritt S3 wird das Verhalten des Gesamtsystems 103 simuliert, indem der Gesamtzwilling 108 ausgeführt wird. Dadurch werden Simulationsergebnisse 113 erzeugt.

Die nachfolgenden Schritte beschreiben eine Verifizierung der Simulationsergebnisse, die iterativ durchgeführt werden kann, bis das gewünschte Ergebnis erzielt ist. Dabei können mehrere Auslegungsstufen (Iterationen) notwendig, um zu dem gewünschten Ergebnis zu gelangen. "Das gewünschte Ergebnis" wird meist als ein vorgebbares Abbruchkriterium implementiert. Wird das Kriterium bei einer Auslegungsstufe erfüllt, gelten die in der in dieser Stufe vorliegenden Simulationsergebnisse als verifiziert. Der korrespondierende Parametersatz kann zur Auslegung des Antriebssystems 100 verwendet werden.

Also wird in einem Schritt S4 das Antriebssystem 100 des Gesamtsystems 103 zunächst gemäß dem Startparametersatz 110 ausgelegt - es erfolgt die Grobauslegung.

In einem Schritt S5 werden die Simulationsergebnisse 113 mit dem Verhalten des Gesamtsystem 103 verglichen.

In einem Schritt S6 wird zunächst geprüft, ob Verhaltens des Gesamtsystem 103 von den Simulationsergebnissen 113 abweicht, was in der Regel bei der ersten Grobauslegung oft der Fall sein dürfte.

Wird dennoch keine Abweichung festgestellt, gilt bereits der Startparametersatz 110 als verifiziert und kann zur Auslegung des Antriebssystems 100 verwendet werden - Schritt S60. In diesem Fall endet die Auslegung nach der Übernahme des Startparametersatzes 110 - Schritt S61.

Wird eine Abweichung festgestellt, kann sie analysiert werden, um festzustellen, wo der Optimierungsbedarf besteht. Dabei kann es beispielsweise untersucht werden, ob es eine bestimmte Domäne (elektrische, thermische, mechanische), bei der die Simulation nicht zu den experimentellen Daten 114 passt oder ob es andere gewählten Parameter des Antriebs 100 die zu einer nicht optimalen Steuerung des Prozesses 101 beitragen.

Jedenfalls wird der Antriebszwilling 105 hinsichtlich eines Optimierungsziels optimiert, wobei das Optimierungsziel aufgrund der erfolgten Analyse der Abweichung ermittelt und festgelegt werden kann.

Dabei kann es zweckmäßig sein, den Detaillierungsgrad des Antriebszwillings 105 und/oder des Streckenmodells 106 zu verändern, um bessere Optimierungsergebnisse zu erhalten.

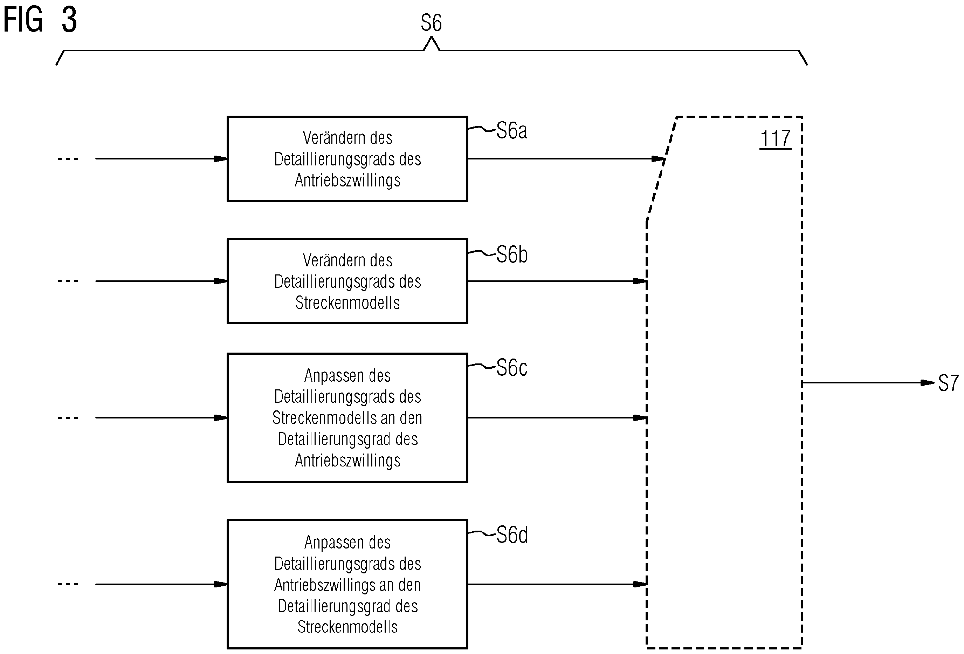

Es sind beispielsweise folgende Teilschritte möglich (siehe FIG 3). In Schritt S6a wird beispielsweise nur der Detaillierungsgrad des Antriebszwillings 105 geändert, ohne dass dabei der Detaillierungsgrad des Streckenmodells 106 geändert wird. In Schritt S6b wird beispielsweise umgekehrt nur der Detaillierungsgrad des Streckenmodells 106 geändert, ohne dass dabei der Detaillierungsgrad des Antriebszwillings 105 geändert wird. Denkbar ist es auch, dass der Detaillierungsgrad sowohl des Antriebszwillings 105 als auch des Streckenmodells 106 geändert wird.

Das Ändern eine Verfeinerung oder auch eine Vergröberung der Aspekte der entsprechenden Modelle sein.

Beispielsweise kann Anzahl und/oder Typ der Anschlussstellen und/oder Abtastraten der Modelle geändert werden.

Darüber hinaus kann die Änderung eines Modells, z.B. des Antriebszwillings 105 auch eine Anpassung des Streckenmodells 106 zweckdienlich machen. In diesem Fall wird der Detaillierungsgrad des Streckenmodells 106 an den Detaillierungsgrad des Antriebszwillings 105 angepasst - Schritt S6c.

Der umgekehrte Fall ist ebenfalls denkbar, in welchem - so wie in Schritt S6d - der Detaillierungsgrad des Antriebszwillings 105 an den Detaillierungsgrad des Streckenmodells 106 angepasst wird.

Im Rahmen dieser Optimierung S6, vorzugsweise S6a, S6b, S6c, oder S6d, wird ein optimierter Parametersatz 117 für den Antriebszwilling 105 erzeugt (vgl. FIG 3), mit dem das Antriebssystem 100 ausgelegt werden kann.

In einem Schritt S7 wird das Antriebssystem 100 des Gesamtsystems 103 gemäß dem optimierten Parametersatz 117 ausgelegt. Dadurch wird ein optimiertes Antriebssystem 100 für die Steuerstrecke 101 geschaffen.

Nun kann auch der optimierte Parametersatz 117 verifiziert werden. Hierzu werden die vorgenannten Schritte ab Schritt S3 wiederholt - S70, wobei zur Simulation der Antriebszwilling 105 mit dem optimierten Parametersatz 117 und nicht mit dem Startparametersatz 110 parametriert wird.

Das Konfigurations- beziehungsweise Parametrierungstool 107 kann in einer Recheneinrichtung (hier nicht gezeigt) gespeichert sein und von dieser ausgeführt werden. Die Recheneinrichtung kann beispielsweise als ein System von miteinander kommunizierenden Rechnern, z.B. als eine Cloud-Infrastruktur ausgebildet sein.

Die Recheneinrichtung umfasst eine Engineering-Plattform. Die Engineering-Plattform kann Konfigurations- beziehungsweise Parametrierungstool 107 umfassen und dieses ausführen. In diesem Fall umfasst die Engineering-Plattform einen entsprechenden Solver um die vorgenannten Modelle auszuführen.

Die vorgenannten Modelle und insbesondere der Gesamtzwilling 108 können aber auch als eine Co-Simulation in der Recheneinrichtung ausgeführt werden. D.h. die Modelle werden nicht durch die Engineering-Plattform ausgeführt und sind nicht als ein Teil der Engineering-Plattform ausgebildet. In diesem Fall findet eine Interprozess-Kommunikation zwischen der Engineering-Plattform und beispielsweise dem Gesamtzwilling 108 oder einem Teil des Gesamtzwillings 108, z.B. dem Antriebszwilling 105 oder Streckenmodell 106, statt. Bei dieser Interprozess-Kommunikation arbeitet die Engineering-Plattform einen Teil-Prozess ab, der das eine oder mehr der vorgenannten Modelle (z.B. den Gesamtzwilling 108, den Antriebszwilling 105, das Streckenmodell 106 usw.) mit entsprechenden für die Simulation notwendigen Informationen versorgt und vorzugsweise die Simulation orchestriert. Dabei enthält die Engineering-Plattform keinen Solver, der für das Abarbeiten des / der entsprechenden Modells / Modelle zuständig ist. Insbesondere kann der Solver auf einem entfernten Rechner, z.B. in der Cloud ablaufen.

Die Aufgabe dieser Beschreibung besteht lediglich darin, veranschaulichende Beispiele bereitzustellen und weitere Vorteile und Besonderheiten dieser Erfindung anzugeben. Somit kann sie nicht als Einschränkung des Anwendungsgebiets der Erfindung beziehungsweise der in den Ansprüchen beanspruchten Patentrechte interpretiert werden. Insbesondere können die im Zusammenhang mit den hier beschriebenen Verfahren offenbarte Merkmale sinnvollerweise zur Weiterbildung der hier beschriebenen Systeme eingesetzt werden und *vice versa.*

## Patentansprüche

1. Computergestütztes Verfahren zum Auslegen zumindest eines Antriebssystems (100), welches eine Steuerstrecke (101) unmittelbar beeinflusst (102), wobei das Antriebssystem (100) und die Steuerstrecke (101) gemeinsam ein Gesamtsystem (103) bilden, wobei
| | |
|---|---|
| (S1) | ein konfigurierbarer digitaler Zwilling des Antriebssystems (100) - ein Antriebszwilling (105) - und ein vorgegebenes konfigurierbares Modell der Steuerstrecke (101) - ein Streckenmodell (106) - bereitgestellt werden, |
| (S2) | der Antriebszwilling (105) mit dem Streckenmodell (106) zu einem ablauffähigen digitalen Zwilling des Gesamtsystems (103) - einem Gesamtzwilling (108) - verknüpft wird, wobei beim Verknüpfen der Antriebszwilling (105) parametriert wird, wodurch ein Startparametersatz (110) des Antriebszwillings (105) festgelegt wird, |
| (S3) | der Gesamtzwilling (108) ausgeführt wird, um das Verhalten des Gesamtsystems (103) zu simulieren und dadurch Simulationsergebnisse (113) zu erhalten, |
| (S4) | das Antriebssystem (100) des Gesamtsystems (103) gemäß dem Startparametersatz (110) ausgelegt wird, |
| (S5) | die Simulationsergebnisse (113) mit dem Verhalten des Gesamtsystem (103) verglichen werden, |
| (S6) | bei Abweichen des Verhaltens des Gesamtsystem (103) von den Simulationsergebnissen (113), zumindest der Antriebszwilling (105) hinsichtlich eines vorgegebenen Optimierungsziels optimiert wird, wodurch ein optimierter Parametersatz (117) des Antriebszwillings (105) erhalten wird, |
| (S7) | das Antriebssystem (100) des Gesamtsystems (103) gemäß dem optimierten Parametersatz (117) ausgelegt wird. |

2. Verfahren nach Anspruch 1, wobei Schritte S3 bis S7 zumindest einmal wiederholt werden (S70).

3. Verfahren nach Anspruch 2, wobei bei unterschiedlichen Wiederholungen hinsichtlich unterschiedlicher Optimierungsziele optimiert wird.

4. Verfahren nach Anspruch 1 bis 3, wobei der Antriebszwilling (105) hinsichtlich seines Detaillierungsgrads und/oder das Streckenmodell (106) hinsichtlich seines Detaillierungsgrads konfigurierbar sind/ist, wobei bei dem Optimieren (S6a, S6b) der Detaillierungsgrad des Antriebszwillings (105) und/oder des Streckenmodells (106) geändert wird.

5. Verfahren nach Anspruch 4, wobei Anzahl und/oder Typ der Anschlussstellen und/oder Abtastraten des Antriebszwillings (105) und/oder des Streckenmodells (106) geändert werden.

6. Verfahren nach Anspruch 4 oder 5, wobei der Antriebszwilling (105) hinsichtlich seines Detaillierungsgrads und das Streckenmodell (106) hinsichtlich seines Detaillierungsgrads konfigurierbar sind und wobei bei dem Optimieren der Detaillierungsgrad des Antriebszwillings (105) an den Detaillierungsgrad des Streckenmodells (106) oder umgekehrt angepasst wird (S6c, S6d).

7. Verfahren nach einem der Ansprüche 1 bis 6, wobei der Antriebszwilling (105) mehrere parametrierbare, miteinander verknüpfbare, und aufeinander abstimmbare Simulationsmodelle (105a bis 105e) umfasst.

8. Verfahren nach Anspruch 7, wobei unterschiedliche Simulationsmodelle (105a bis 105e) unterschiedlichen Simulationsdomänen zugeordnet sind.

9. Verfahren nach Anspruch 7 oder 8, wobei jedes Simulationsmodell (105a bis 105e) ein stationäres oder dynamisches Simulationsmodell ist.

10. Verfahren nach Anspruch 9, wobei das Simulationsmodell (105a bis 105e) ein thermisches Simulationsmodell, ein elektrisches Simulationsmodell, ein mechanisches Simulationsmodell, ein magnetisches Modell, ein akustisches Modell, ein informationstechnisches, beispielsweise ein informationselektromagnetisches oder ein regelungstechnisches Modell oder eine Kombination davon ist oder eine Kombination davon ist.

11. Verfahren nach einem der Ansprüche 1 bis 10, wobei die Steuerstrecke (101) zusätzlich zumindest eine Rückführung (104) aufweist.

12. Verfahren nach einem der Ansprüche 1 bis 11, wobei die Simulationsergebnisse (113) Informationen über ein Interaktionsverhalten des Antriebszwillings (105) mit dem Streckenmodell (106) umfassen.

13. Recheneinrichtung umfassend eine Engineering-Plattform, welche dazu konfiguriert ist, ein Verfahren nach einem der Ansprüche 1 bis 12 auszuführen oder zu orchestrieren.

14. Computerprogramm, welches Befehle umfasst, die, wenn sie von einer Recheneinrichtung nach Anspruch 13 abgearbeitet werden, diese dazu veranlassen, ein Verfahren nach einem der Ansprüche 1 bis 12 auszuführen.

15. Maschinenlesbares Medium mit einem Computerprogramm nach Anspruch 14.
